# EUROPEAN PATENT APPLICATION

(11) **EP 2 801 405 A1**
(43) Date of publication of application: **12.11.2014**
(21) Application number: 14167012.5
(22) Date of filing: 05.05.2014
(51) Int. Cl.: B01J 20/04, B01J 20/30, B01J 20/28, C02F 1/28, C01B 25/32, B01D 39/06

(54) **Process for preparing hydroxyapatite-based filtration material, and plant for implementing the process**

(30) Priority: 08.05.2013 IT VE20130024
(71) Applicant: Gruppo Zilio S.P.A., 36022 Cassola (IT)
(72) Inventor: Zilio, Damiano, 36022 Cassola (IT); Ragazzon, Daniele, 36022 Cassola (IT)
(74) Representative: Piovesana, Paolo

(57) **Abstract**

A process for preparing hydroxyapatite-based filtration material, characterised by:
- in a first step, mixing calcium hydroxide and water to obtain a solution having a pH of about 12, then adding phosphoric acid to the solution in order to lower the pH to a value of about 10, the weight percentage ratios (phosphoric acid, calcium hydroxide and water) being between 2.1:2.5:95.4 and 2.5:3.2:94.3, to obtain a dispersion of hydroxyapatite having a solids content between 3% and 5% by weight,
- feeding the dispersion to a filter press operating in the range between 10 and 13 bar, from which a cake leaves having a hydroxyapatite content between 25% and 32% by weight,
- to the hydroxyapatite dispersion obtained from the filter press, adding hydroxyapatite in powder form having particles of dimensions less than 325 mesh and calcined within a range between 600°C and 800°C, in a weight percentage ratio of hydroxyapatite /hydroxyapatite powder from 56.4:43.6 to 66:34,
- feeding the product obtained to an extruder to obtain small cylinders,
- subjecting the cylinders to drying at a temperature between 70°C and 90°C.

## Description

The present invention relates to a process for preparing hydroxyapatite-based filtration material, and a plant for implementing the process.

It is known to remove fluorides from water to achieve potabilization by adsorption on hydroxyapatite-based filtration masses.

The action mechanism involves substituting a hydroxyl group present in the hydroxyapatite crystalline structure by a fluoride ion present in water. As the hydroxyapatite has much more affinity for the fluoride ion than for the hydroxyl, the exchange equilibrium is completely displaced towards the form in which the fluoride is adsorbed, hence giving rise to the extreme effectiveness of the hydroxyapatite filtration function.

Hydroxyapatite is present in nature as a mineral from which the pure product is obtained by various processing steps including solubilization, precipitation of the product, and finally calcination to obtain a very fine powder.

Hydroxyapatite can also be obtained synthetically by reaction of phosphoric acid with calcium hydroxide under controlled conditions.

Whatever process is used to obtain the hydroxyapatite, it has a high adsorption capacity but presents the drawback of being in the form of a very fine powder with particle dimensions of just a few microns.

The small dimensions of these particles consequently make it impossible to use them in normal water potabilization filters, in which the filtration layer is traversed by a water flow which would entrain the hydroxyapatite power with it.

To obviate these drawbacks, it has been proposed to mix hydroxyapatite with a binder and then subject the mixture to extrusion to obtain pellets of the desired dimensions.

However this process has the drawback that the presence of a binder drastically reduces the available active surface of the hydroxyapatite with a consequently low yield in terms of adsorption capacity, as it obstructs the material pores which contribute overwhelmingly to the adsorption process.

The object of the invention is to provide a hydroxyapatite-based filtration material which can be used for water potabilization.

This object is attained according to the invention by a process for preparing hydroxyapatite-based filtration material as described in claim 1.

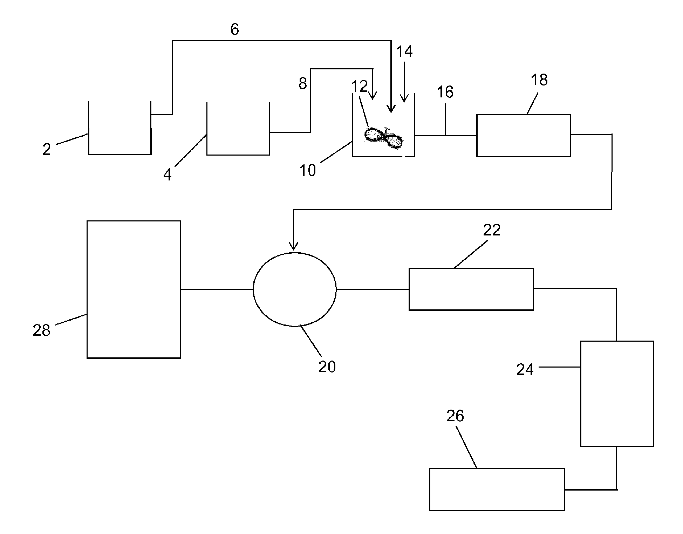

The present invention is further clarified hereinafter by way of a preferred embodiment thereof provided by way of non-limiting example with reference to the accompanying drawing showing in schematic view a plant for implementing the process.

As can be seen from the figure, the plant for implementing the process according to the invention comprises substantially a tank 2 containing phosphoric acid and a tank 4 containing calcium hydroxide, the outlets 6, 8 respectively of which are connected to a reactor 10 provided with a stirrer 12.

A water feed conduit 14 is also connected to the reactor 10.

The outlet 16 of the reactor 10 is connected to a filter press 18 connected to a mixer 20. The mixer is connected to an extruder 22 which is connected to a drier 24 fed with hot air originating from a generator 26.

According to the process of the invention, calcium hydroxide and water are initially fed into the reactor 10 such as to achieve a pH of about 12, then followed slowly by phosphoric acid under vigorous agitation such as to cause the pH to fall.

The addition of phosphoric acid is terminated on reaching a pH of about 10 such as to ensure that the calcium phosphate obtained is hydroxyapatite.

In particular the weight percentage ratios of the components (phosphoric acid, calcium hydroxide and water) lie between 2.1:2.5:95.4 and 2.5:3.2:94.3, preferably 2.25:2.85:94.9.

On its exit from the reactor 10 the sludge is in the form of a solid suspension of hydroxyapatite having a solids content between 3% and 5% by weight.

This dispersion is fed to the filter press 18 operating at a pressure between 10 and 13 bar, from which a cake leaves having a hydroxyapatite content between 25% and 32% by weight.

The cake is fed to the mixer 20 where hydroxyapatite in power form is added, containing particles of dimensions less than 352 mesh and calcined at a temperature of 600-800°C, originating from a tank 28, in a weight percentage ratio of hydroxyapatite/hydroxyapatite powder between 56.4:43.6 and 66:34, preferably 61.5:38.5. such as to obtain a friable mixture with a water content around 40%. In particular, mixing takes place at a temperature in the range of 5-40°C at atmospheric pressure.

The friable mixture is fed to the extruder 22 to obtain small cylinders of variable length and of diameter equal to that of the passage port of the extruder die. Preferably these cylinders have a diameter between 1 and 5 mm and a length between 1 and 6 mm, but in any event of dimensions suitable for being retained by the slots provided in the base of the filter supporting the filtration material.

The cylinders or pellets are then fed to the drier 24 where they are struck by a flow of hot air originating from the generator 26, such as to evaporate all the water contained therein, to then be fed into the filters where potabilization is carried out.

The pellets can also be dried by irradiation by lamps or by microwaves, in addition to exposure to hot air.

In particular the drying temperature (80°C), is chosen as a compromise between lower values which favour fluoride adsorption but at the same time give rise to undesired formation of bacterial colonies, and higher values which ensure an effective sterilization but at the same time reduce the adsorption capacity of the hydroxyapatite.

## Claims

1. A process for preparing hydroxyapatite-based filtration material, **characterised by**:
- in a first step, mixing calcium hydroxide and water to obtain a solution having a pH of about 12, then adding phosphoric acid to the solution in order to lower the pH to a value of about 10, the weight percentage ratios (phosphoric acid, calcium hydroxide and water) being between 2.1:2.5:95.4 and 2.5:3.2:94.3, to obtain a dispersion of hydroxyapatite having a solids content between 3% and 5% by weight,
- feeding the dispersion to a filter press operating in the range between 10 and 13 bar, from which a cake leaves having a hydroxyapatite content between 25% and 32% by weight,
- to the hydroxyapatite dispersion obtained from the filter press, adding hydroxyapatite in powder form having particles of dimensions less than 325 mesh and calcined within a range between 600°C and 800°C, in a weight percentage ratio of hydroxyapatite /hydroxyapatite powder from 56.4:43.6 to 66:34,
- feeding the product obtained to an extruder to obtain small cylinders,
- subjecting the cylinders to drying at a temperature between 70°C and 90°C.

2. A process as claimed in claim 1, **characterised by** mixing phosphoric acid, calcium hydroxide and water in weight percentages of 2.25:2.85:94.9.

3. A process as claimed in claim 1, **characterised by** adding hydroxyapatite powder in a weight percentage ratio of hydroxyapatite /hydroxyapatite powder of 61.5:38.5.

4. A plant for implementing the process claimed in one or more of claims from 1 to 3, **characterised by** comprising:
- a reactor (10) for mixing water with phosphoric acid and calcium hydroxide,
- a filter press (18) fed with the dispersion leaving the reactor (10),
- a mixer (20) for mixing hydroxyapatite in powdered form, with particles of dimensions less than 325 mesh and calcined within a temperature range between 600°C and 800°C, with the sludge leaving the filter press (18).
- an extruder (22) for the mixture leaving the mixer (20),
- a drying source (24) for the extruded material leaving the extruder (22).
